# EUROPEAN PATENT APPLICATION

(11) **EP 4 672 844 A1**
(43) Date of publication of application: **31.12.2025**
(21) Application number: 25182822.4
(22) Date of filing: 13.06.2025
(51) Int. Cl.: H04W 74/06, H04W 52/02, H04W 84/18

(54) **POWER EFFICIENT DATA POLLING BY A WIRELESS MESH NETWORK DEVICE**

(30) Priority: 27.06.2024 RO 202400375
(71) Applicant: NXP USA, Inc., Austin, TX 78735 (US)
(72) Inventor: GUCEA, Doru Cristian, 5656AG Eindhoven (NL); VILVOI, Marius-Marian, 5656AG Eindhoven (NL); STEFAN, George, 5656AG Eindhoven (NL)
(74) Representative: Hardingham, Christopher Mark

(57) **Abstract**

Methods and device architectures for improving the energy efficiency of end devices in a wireless mesh network. In an example, an end device of the network includes a wireless transceiver, a first processing core configured to implement a media access control layer (MAC), and a second processing core configured to implement a physical layer (PHY). The PHY operates to receive a first data poll message from the MAC and transmit the message to an external device via the wireless transceiver. The PHY further operates to receive an acknowledge message including a frame pending value. If the frame pending value indicates that the external device does not have buffered data for the end device, the PHY generates a second data poll message based on the first data poll message, including incrementing one or more of a sequence number field value, a frame counter field value, and a message integrity check field of the first data poll message, thereby enabling the MAC to remain in a low power state while the PHY transmits the second data poll message.

## Description

### BACKGROUND OF THE INVENTION

### FIELD OF THE INVENTION

This invention relates generally wireless networking, and more particularly to reducing the power consumption of end devices in wireless mesh networks.

### DESCRIPTION OF RELATED ART

In wireless mesh networks, end devices are often designed to operate for prolonged periods of time on battery power. Such end devices may be configured to go to sleep periodically (i.e., by entering a standby or low power mode of operation) in order to extend their battery life. As a result, end devices are only intermittently connected to the network to send and receive data packets.

A sleeping end device may be configured to wake up periodically to send data to a network. For example, a sleeping end device may occasionally wake up and transmit data, such as sensor data, to a parent device (e.g., a mesh extender, router, coordinator, etc.). Likewise, a sleeping end device may be configured to wake up at periodic intervals to send a data poll message to the parent device to determine if the parent device has data to send to the end device. In response, the end device typically receives an acknowledgment from the parent device that indicates the presence or absence of pending data. Transmission of the data request and reception of the response from the parent device require the end device to stay awake, thus consuming battery power.

### BRIEF DESCRIPTION OF THE DRAWINGS

One or more embodiments will now be described by way of example only with reference to the accompanying drawings, in which:
Figure 1 illustrates an example of a wireless mesh network that includes end devices implemented in accordance with embodiments of the present disclosure;
Figure 2 illustrates an example of a networking stack of an end device according to an embodiment of the present disclosure;
Figure 3 is a schematic block diagram of example of an end device in accordance with embodiments of the present disclosure;
Figure 4 illustrates MAC and PHY power states during a data polling message sequence between an end device and an external device according to various embodiments of the present disclosure;
Figure 5 illustrates further details of a data polling message sequence between an end device and an external device according to an embodiment of the present disclosure;
Figure 6 illustrates the format of a Frame Control field of an IEEE 802.15.4 Enh-Ack frame or Imm-Ack frame;
Figure 7 illustrates an IEEE 802.15.4 PHY frame format and an IEEE 802.15.4 MAC command frame format;
Figure 8 is logic diagram of data polling operations and data poll message generation by a PHY of an end device according to an embodiment of the present disclosure;
Figure 9 is a logic diagram illustrating a PHY of an end device calculating a random backoff value for use in transmitting a data poll message subsequent to the next data polling interval; and
Figure 10 illustrates an example of a wireless mesh network device according to an embodiment of the present disclosure.

### DETAILED DESCRIPTION

Various methods and device architectures are described herein for improving the energy efficiency of data polling by end devices data of a wireless mesh network. In an example, an end device includes a first processing core configured to implement a media access control layer (MAC) and a second processing core configured to implement a physical layer (PHY). The PHY includes a data poll accelerator that functions to generate certain data poll messages which would otherwise be generated at the MAC layer under conventional approaches.

In operation, the PHY receives a first data poll message from the MAC and transmits the message to an external device. An acknowledgement message is received from the external device, including a frame pending value. If the frame pending value indicates that there is buffered data for the end device, the PHY notifies the MAC (thereby activating a MAC state machine). If the PHY the frame pending value instead indicates that the external device does not have buffered data for the end device, the data poll accelerator generates a second, successive data poll message that is based on the first data poll message, thereby allowing the MAC to remain in a low power state and conserve energy while the PHY transmits the second data poll message at the next scheduled polling interval.

In another example, while the PHY is awake to transmit the first data poll message, the PHY further calculates a CSMA/CA random backoff value for transmission of the second data poll. In this example, the PHY enters a low power state following transmission of the first data poll message and exits the low power state following a period of time that corresponds to the next scheduled polling interval plus the calculated random backoff value (i.e., the PHY does not need to wake up at the next polling interval in order to calculate the random backoff value). These and other power saving features according to the present disclosure are described more fully below.

In general, wireless mesh networks are communication networks having wireless nodes connected in a mesh topology that provides reliable and redundant communication paths for data traffic. Wireless mesh networks can use multiple radio links, or hops, to forward data traffic between devices within the network, thereby providing coverage for areas larger than the area covered by a single radio link.

Wireless mesh networks may be implemented based on proprietary technologies, standards-based technologies, or combinations thereof. For example, wireless mesh networks may be based on the Institute of Electrical and Electronics Engineers (IEEE) 802.15.4 standard (titled Low-Rate Wireless Personal Area Networks (LR-WPANs). This standard primarily defines Media Access Control layer (MAC) and physical layer (PHY) features and services for use by applications at upper layers of a networking stack. This standard is primarily intended for use by small area networks with low data rates and low energy consumption. Upper-layer applications rely on such standardized services to support addressing and routing of packet data that enable application-level communication across the mesh network, as well as between the mesh network and external networks (e.g., the Internet).

End devices (also known as a "child devices") used in wireless mesh networks may be designed for low power battery or solar operation over long periods of time, such as months or years. Examples of such end devices include, but are not limited to, thermostats, hazard detectors (e.g., smoke, carbon monoxide, water, etc.), home security sensors (e.g., door, window, motion, etc.), cameras, lighting units, door locks, fans, appliances, pool heaters, irrigation systems, intercoms, garage-door openers, control panels, energy management devices, smart meters, closure sensors, etc.

To achieve long service life, a battery-powered end device may turn off many of its functions, such as radio and network interfaces. During so-called "sleep" periods, end devices are not available on the mesh network to receive packets. A parent device (e.g., a mesh extender, router, coordinator, access point, etc.) which is always active may act on behalf of the end device while the end device is sleeping. For example, the parent device may buffer packets (referred to herein as "buffered data" or "pending data") destined for the end device and respond to other devices on behalf of the end device.

After exiting a sleep period, an end device may transmit a Data Request frame (e.g., a MAC command frame referred to herein as a "data poll message") to a parent device to determine if there is buffered data and to request any such data. The parent device responds with the buffered data or an acknowledgement indicating whether there is buffered data pending to send to the end device. Over time, acknowledgement (ACK) messages have been enhanced to include an indication of pending data for an end device (e.g., IEEE 802.15.4 Enh-Ack frames and Imm-Ack frames). More particularly, a MAC entity in an end device may transmit a data poll message to a parent device, and a MAC entity in the parent device responds with an IEEE Enh-Ack frame or Imm-Ack frame which includes a Frame Pending (FP) bit that is used by the end device to identify the presence of buffered data.

After receiving an Enh-Ack/Imm-Ack frame, if the FP bit indicates that there is no data pending for the end device, the end device can turn off its receiver and return to a sleep state (e.g., a low power state or low power mode). Conversely, if the FP bit indicates that there is data pending for the end device, the end device can retrieve the data from the parent device. For example, assume that an end device wakes up (e.g., at a scheduled data polling interval) only to check whether its parent device has any data buffered for it. This may be achieved by sending a data poll message to the parent device, and the parent signals that it has buffered data for the end device by setting the FP bit in the ACK frame corresponding to the data poll message. The parent device then forwards the buffered data to the end device.

Over time, the described data polling communications can have a significant impact on the battery life of an end device. Consider, for example, an intermittently connected end device (e.g., a fire alarm sensor) that reports data infrequently and is otherwise idle. In this example, the end device is configured to submit a subscription report at the end of an idle mode duration period. During the idle mode duration period, the end device is further configured to send data poll messages at predetermined polling intervals. Assuming an idle mode duration of 2 hours and a polling interval of 15 seconds, the end device has to send 480 data poll messages during idle mode duration period. Most of the time, the end device will wake up, send a data poll message, and then immediately return to sleep because it receives an ACK with FP=0. In this example, the main impact on battery lifetime will often be the energy charge required for data polling.

To address these, and other concerns, device architectures and methods described herein enable wireless mesh network end devices to reduce polling-related energy consumption by offloading data poll message generation from the MAC to the PHY of an end device, thereby allowing the MAC to remain in a low power state until data is pending for the end device. As compared to conventional data polling operations by an end device, the power saving features described herein may result in substantial power savings (e.g., 30% or more).

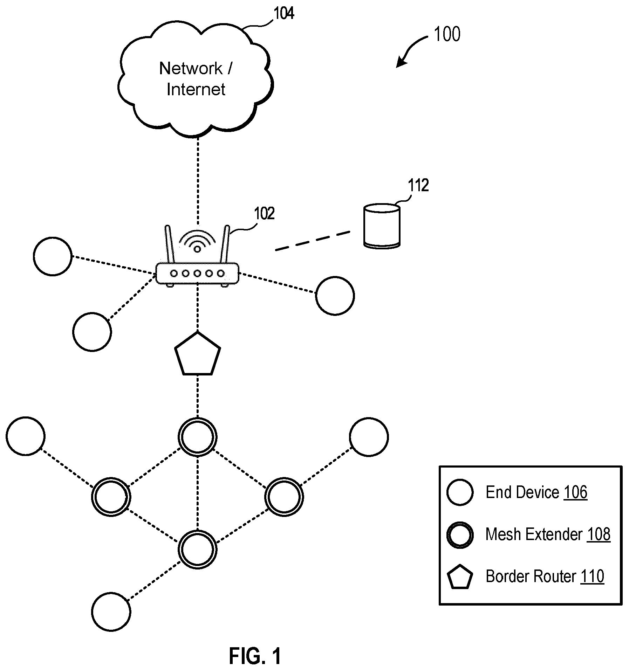

Referring more specifically to Figure 1, an example of a wireless mesh network 100 is illustrated in which various methods and device architectures described herein may be implemented. The illustrated mesh network 100 includes a wireless access point 102, end devices 106, mesh extenders 108, and a border router 110. The mesh network 100 may further include one or more mesh controller devices 112.

In this example, the wireless access point 102 couples the mesh network 100 to an external network 104 (e.g., the internet). End devices 106 and mesh extenders 108 are coupled to wireless access point 102 through a border router 110. Each of these devices includes a mesh network interface (e.g., a wireless transceiver) for communication over the wireless mesh network 100.

As used herein, the term "end device" refers to an addressable network device or node that is a source and/or destination of data transmitted over a network. In an example, the end device 106 is a node that communicates with a parent device (e.g., mesh extender 108), does not forward packets for other network devices, and has the ability to disable its wireless transceiver to reduce power. In this example, the mesh extender 108 (or "router") is a node that forwards packets for network devices, provides secure commissioning services for devices trying to join the network, and keeps its mesh network interface enabled at all times. In some cases, certain end devices 106 may be "router-eligible" devices located at "leaf" nodes of the mesh network topology and can become parent devices if connected to other mesh network devices.

Some end devices 106 may power down certain operations or hardware for a portion of the time end device 106 is operational. For example, end device 106 may power down radios or network interfaces to conserve power between operations that require a connection to wireless mesh network 100. In an example, a battery-powered temperature sensor may wake periodically to transmit a temperature report, and then sleep until it is time to transmit the next temperature report. When an end device 106 sleeps, it is not actively connected to wireless mesh network 100 to respond to address queries or to receive data packets.

As noted, "sleepy" end devices 106 can further lower power consumption by sleeping for set periods and periodically waking up to send data poll messages to a parent device to determine if it has pending data. In various embodiments, wireless mesh network 100 operates in accordance with the IEEE 802.15.4 standard, where IEEE 802.15.4 Enh-Ack frames and Imm-Ack frames provide a pending data notification.

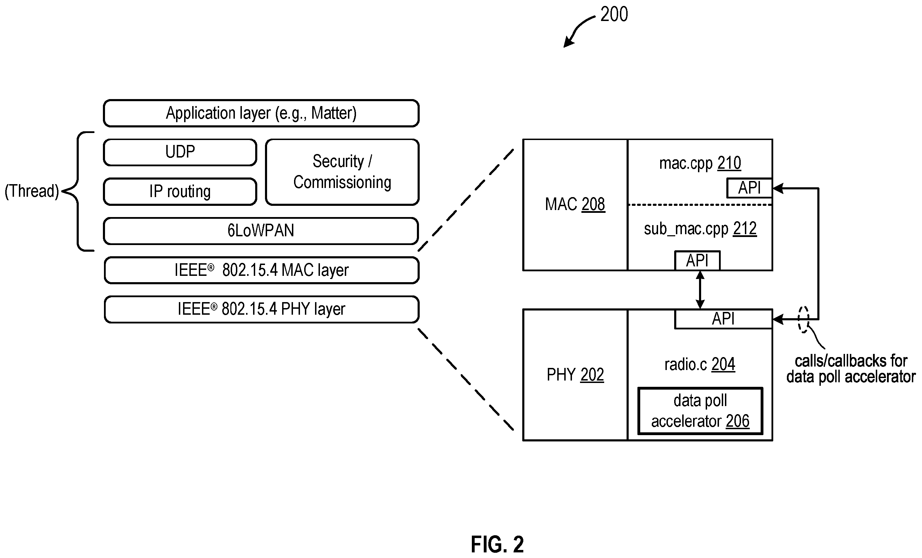

Other wireless mesh network technologies, protocols and standards may be employed in mesh network 100, such as Thread, Zigbee, 6LoWPAN, Z-WAVE, Bluetooth LE, etc., including combinations and variations thereof. As such, the concepts described herein can be applied to the end devices of many different types of mesh networks beyond the embodiments described herein. A non-limiting example of a wireless mesh networking/protocol stack based on Thread and IEEE 802.15.4 is described more fully below with reference to Figure 2.

Figure 2 illustrates a networking stack 200, including the MAC and PHY layers, of an end device according to an embodiment of the present disclosure. In the illustrated example, the PHY and MAC layers of the networking stack are based on the IEEE 802.15.4 standard, while the upper layers are based on Thread and Matter protocols. The Thread specification defines an IPv6-based device-to-device communication protocol for home and similar applications. Matter is an IPv6-based communication protocol for smart home and IoT (Internet of Things) devices that defines an application layer on devices as well as different link layers for maintaining interoperability.

The networking stack 200 may take many other forms, as IEEE 802.15.4 serves as a basis for a variety of current specifications, including Thread, Zigbee, 6LoWPAN, Matter, etc., each of which further extends the standard by developing the upper layers which are not defined in IEEE 802.15.4. For example, 6LoWPAN defines a binding for the IPv6 version of the Internet Protocol (IP) over wireless personal area networks (WPANs) and is itself used by upper layers like Thread.

In the illustrated embodiment, the IEEE 802.15.4 PHY layer is implemented by PHY 202, which includes program code radio.c 204 that implements a data poll accelerator 206. The IEEE 802.15.4 MAC layer is implemented by MAC 208, which in this embodiment includes program code mac.cpp 210 and sub_mac.cpp 212. In this embodiment, mac.cpp 210 and sub_mac.cpp 212 implement the subset of IEEE 802.15.4 primitives required for Thread. As described below, the MAC 208 may be implemented on a first processing core (and/or power domain) of an end device, and the PHY may be implemented on a second processing core (and/or power domain) of the end device.

In the illustrated embodiment, the API for sub_mac.cpp 212 includes calls/callbacks for certain hardware accelerated radio features (e.g., security, channel assessment, etc.). In this embodiment, the API for mac.cpp 210 includes additional calls/callbacks that can be utilized to offload data poll message generation to the data poll accelerator 206. Briefly, when called by mac.cpp 210, the data poll accelerator 206 operates in part to generate data polling messages by incrementing various fields in a prior (or template) data poll message. Such fields may include one or more a sequence number field, a frame counter field, and a message integrity check (MIC) field. Further details of data poll message generation by the data poll accelerator 206 are described below. The data poll accelerator 206 may also pass information back to mac.cpp 210. Such information can include, for example, a number of offloaded data poll messages transmitted by the end device 106 before receiving an ACK with a data pending indication of FP=1, as well as other information that allows the MAC 208 to understand what has occurred during an offloaded data polling sequence. In an example, this information allows the mac.cpp 210 to update a state machine that maintains counters utilized to generate further data/command frames.

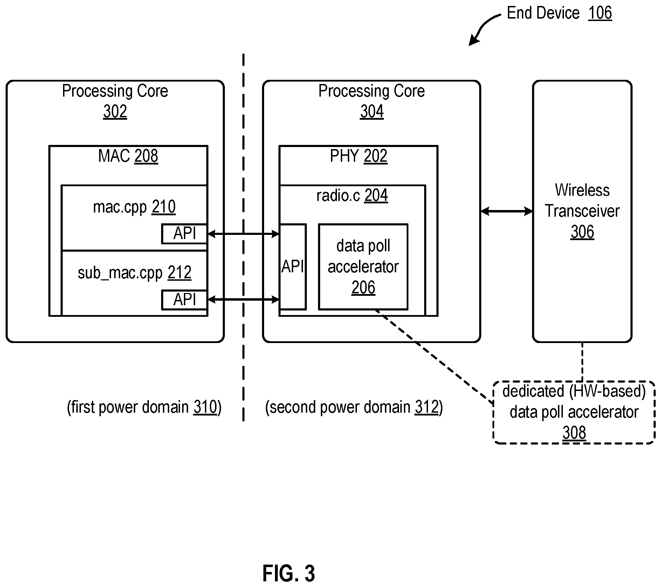

Figure 3 is a schematic block diagram of example of an end device 106 in accordance with embodiments of the present disclosure. The illustrated example includes a processing core 302 configured to implement the MAC 208, a second processing core 304 configured to implement the PHY 202, and a wireless transceiver 306. The processing core 302 and the processing core 304 may be processing cores of a single multi-core processing device or processing cores of separate processing devices. In an example, processing core 302 may be a relatively high power core of a central processing unit or similar device configured to execute computationally intensive operations, while processing core 304 may be a lower power core implemented by a processing device that manages less-demanding processes. In another example, the functions of data poll accelerator 206 of PHY 202 are instead performed by a dedicated hardware-based data poll accelerator 308 (described further below). In operation, the task of generating data poll messages can be offloaded from the MAC 208 to the data poll accelerator of the PHY 202 as described above with reference to Figure 2.

In the illustrated embodiment, processing core 302 and processing core 304 can operate on separate power domains of end device 106 (e.g., such that the cores can be independently activated or placed in a low power state in order to reduce energy consumption during data polling operations). In an example, the processing core 302 operates in a first power domain 310 and the processing core 304 operates in a second power domain 312. In a further example, the processing core 304 and the wireless transceiver 306 both operate in the second power domain 312.

In an example of a hardware-based data poll accelerator 308, device software can prepare the following in advance: a buffer containing a template data poll message (e.g., as received from mac.cpp), a list of next-incremented Sequence Number field values, a list of next-incremented Frame Counter field values, and a list of corresponding message integrity check (MIC) field values that can be utilized to generate successive data poll messages. The number of precomputed Sequence Number, Frame Counter and MIC field values can be determined, for example, by averaging a number of prior data poll messages transmitted by the end device 106 before receiving a data pending indication (FP=1).

In addition, the dedicated hardware may include or utilize a low power timer (e.g., a Wake On Radio low power timer) that can be armed to expire at successive polling intervals. In an example, the low power timer expires following a period of time that corresponds to a polling interval plus a previously calculated CSMA/CA random backoff value. The random backoff value can be calculated in advance, for example, by the PHY 202 or the hardware-based data poll accelerator 308 while the PHY 202 is awake to transmit a data poll message at the previous polling interval.

Continuing with this example, when the low power timer expires, the hardware-based data poll accelerator 308 has the responsibility of generating a second data poll message based on the first data poll message. Generating the second data poll message includes modifying the template data poll message with corresponding values from the list of next-incremented Sequence Number field values, list of next-incremented Frame Counter field values, and list of corresponding message integrity check field values.

In another example, the template data poll message and corresponding lists of next-incremented field values can be stored in a memory, such as SRAM memory (not separately illustrated), that shares a limited power domain with the hardware-based data poll accelerator 308 and the wireless transceiver 306. In this manner, only a minimal number of components of the end device 106 need to be activated in order to perform data polling operations, thereby reducing energy consumption and improving processing speed.

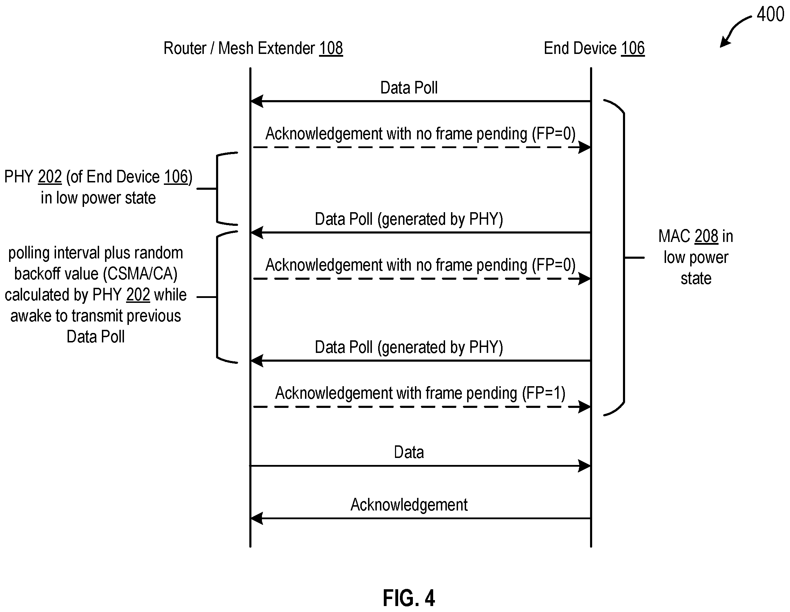

Figure 4 illustrates an example of MAC and PHY power states during a data polling message sequence 400 between an end device 106 and an external device (an "external device" can be a mesh extender, router, or any other parent device) of a wireless mesh network. In the illustrated embodiment, the end device 106 transmits a first data poll message to the mesh extender 108. In an example, the first data poll message is generated by the PHY layer (PHY 202) of the end device 106. In another example, the first data poll message is generated by the MAC layer (MAC 208) of the end device 106 and provided to the PHY 202 for transmission. In this example, the MAC 208 also instructs the PHY 202 (e.g., a data poll accelerator of PHY 202) to generate successive data poll messages based on the first data poll message. The MAC 208 may then enter a low power state and remain in the low power state until it receives a data pending indication from the PHY 202.

In the illustrated data polling message sequence 400, the external device responds to the first data poll message with an acknowledgement message (e.g., Enh-Ack frame) with a Frame Pending (FP) field set to zero, indicating that there is no pending data for the end device 106. While the PHY 202 of end device 106 is awake to process the first data poll message, the PHY 202 can be further configured to calculate a CSMA/CA random backoff value for use in transmitting the next data poll. In this example, the PHY 202 enters a low power state following receipt of the first acknowledgment message and exits the low power state following a period of time that corresponds to the next scheduled polling interval plus the previously calculated random backoff value. In this manner, the PHY 202 does not need to wake up at the next polling interval in order to calculate the random backoff value. After exiting the low power state, the PHY 202 generates a second data poll message (based on the previous data poll message) and transmits it to the external device. This process is repeated until the PHY 202 receives an acknowledgement message with a Frame Pending field set to one.

In response to determining that the external device has buffered data for the end device, the PHY 202 provides a data pending indication to the MAC 208. The data pending indication causes the MAC 208 to exit a low power state for processing of received data and communicating with a next higher layer of the end device 106.

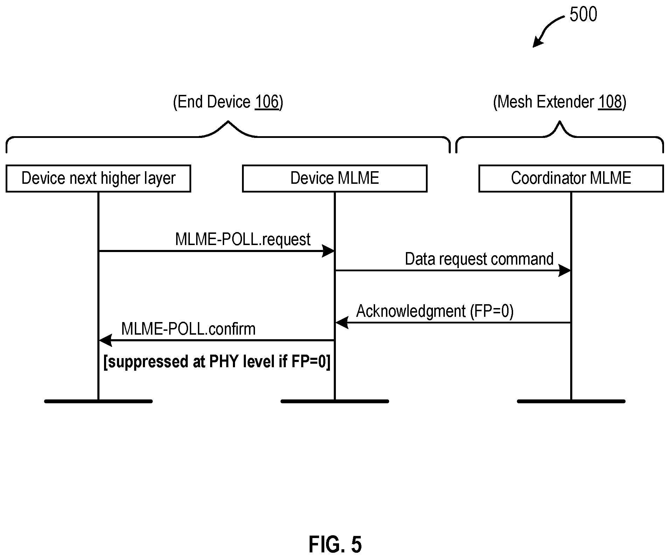

Figure 5 illustrates further details of a data polling message sequence 500 between MAC entities of an end device and an external device according to an embodiment of the present disclosure. In the illustrated embodiment, messaging entities include a Coordinator MAC sublayer management entity (MLME), a Device MLME, and a Device next higher layer (e.g., such as described in the IEEE 802.15.4 standard). The Coordinator MLME can be implemented by a MAC of a mesh extender 108 or other parent device. The Device MLME and Device next higher layer can be implemented in an end device 106. For example, the Device MLME can be implemented by MAC 208 of the end device 106, and the next higher layers may consist of a network layer (providing network configuration, manipulation, and message routing) and an application layer (providing the intended function of the device).

The data polling message sequence 500 is initiated by a poll request (MLME-POLL request) from the Device next higher layer to the Device MLME, which then transmits a Data request command to the Coordinator MLME. The corresponding ACK frame has the Frame Pending (FP) field set to zero.

In a conventional data polling message sequence, the Device MLME immediately issues a poll request confirmation (MLME-POLL confirm) to the Device next higher layer. In contrast, in a data polling message sequence according to embodiments of the present disclosure, the poll request confirmation is suppressed (by data poll message offloading) until a data pending indication (FP=1) causes the MAC to exit a low power state and issue a poll request confirmation to the Device next higher layer.

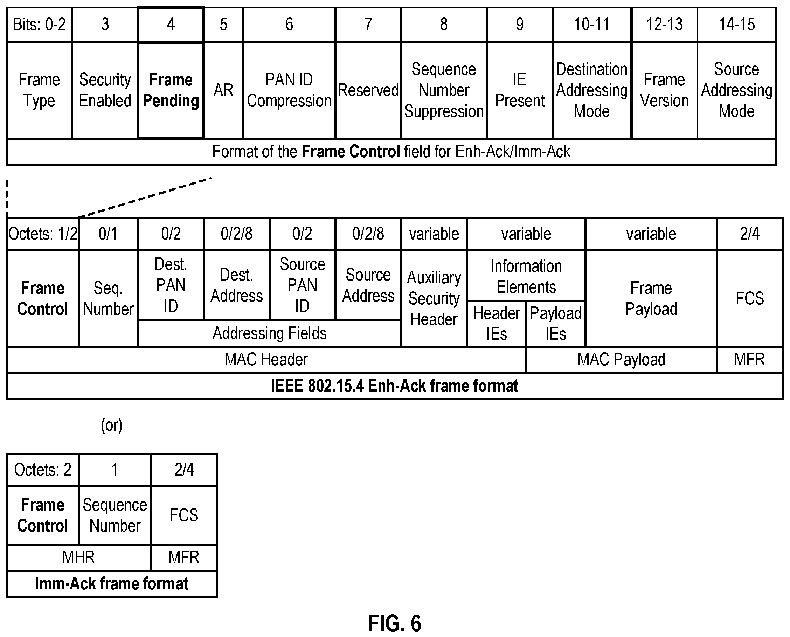

Figure 6 illustrates the format of a Frame Control field of an IEEE 802.15.4 Enhanced ACK (Enh-Ack) frame or immediate ACK (Imm-Ack) frame. An acknowledgement (ACK) frame is typically sent by a communication device following receipt of a packet from another device that has requested an acknowledgement. In an example, an end device of wireless mesh network receives an Enh-Ack or Imm-Ack with a frame pending value in response to a data poll message.

The Imm-Ack frame comprises a MAC header (MHR) and a MAC footer (MFR). The MHR comprises a Frame Control field and a Sequence Number field. The Sequence Number field typically contains the sequence number of the frame that is being acknowledged. The MFR comprises a Frame Check Sequence (FCS) field. In many systems it is possible to generate the Imm-Ack frame in hardware. The Enh-Ack frame also comprises an MHR and an MFR. The Enh-Ack frame further comprises additional fields including addressing fields, an Auxiliary Security Header (ASH) field, Information Elements (IEs) and a Frame Payload. The Frame Payload and a portion of the IEs (payload IEs) form a MAC Payload. The addressing fields, the ASH and the remainder of the IEs form the MHR.

Among other control information, the Frame Control field for a Enh-Ack frame/Imm-Ack frame includes a Frame Pending (FP) field that provides an indication of pending data for a recipient of the Enh-Ack frame/Imm-Ack frame. For example, a MAC entity of a parent device of a mesh network can set the FP field (FP=1) of an Enh-Ack frame/Imm-Ack frame transmitted to an end device of the network to notify the end device that the parent device has buffered data to send to the end device.

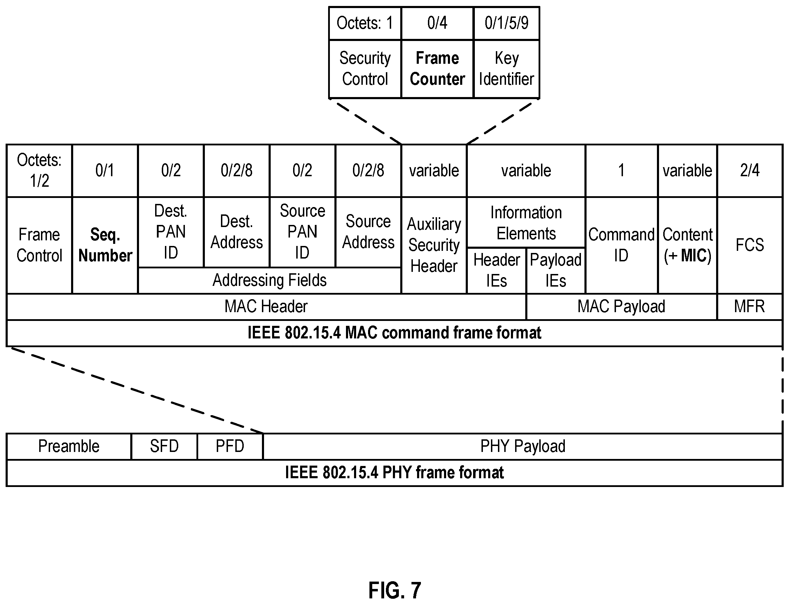

Figure 7 illustrates an IEEE 802.15.4 PHY frame format and an IEEE 802.15.4 MAC command frame format. The PHY frame includes a PHY payload field that transports the MAC command frame which can be utilized for data poll messaging. With the exception of the MAC payload, the fields of the MAC command frame format generally correspond the fields of the Enh-Ack frame format described above with reference to Figure 6.

In the illustrated example, the fields of the MAC command frame format include a Sequence Number field and an Auxiliary Security Header (ASH) field. The Sequence Number field typically contains the sequence number of the frame that is being acknowledged. The ASH field has a variable length and contains information required for security processing. Such information is provided in a Security Control field, a Frame Counter field, and a Key Identifier field.

The value of the Frame Counter field of the ASH field is incremented from frame to successive frame and is used to ensure that a recipient device does not process the same message twice and to prevent replay attacks. For example, an end device may maintain a specific frame counter in memory. If the frame counter value in a received message is lower than or equal to a current stored value, the message is ignored. If the frame counter value in the received message is greater than the current stored value, the end device updates the stored value and continues to process the message. The MAC command frame format further includes a Message Integrity Code (MIC) field used to ensure the integrity of the MAC header and attached payload data. The value of the MIC field is determined by an encryption key, and changes when the value of the Frame Counter field increments.

Accordingly, and by way of example, when the PHY 202 and/or data poll accelerator 206 is configured to generate a data poll message, the process includes incrementing the sequence number field value of the previous data poll message, incrementing a frame counter field value of the previous data poll message, and updating a message integrity check field of the previous data poll message.

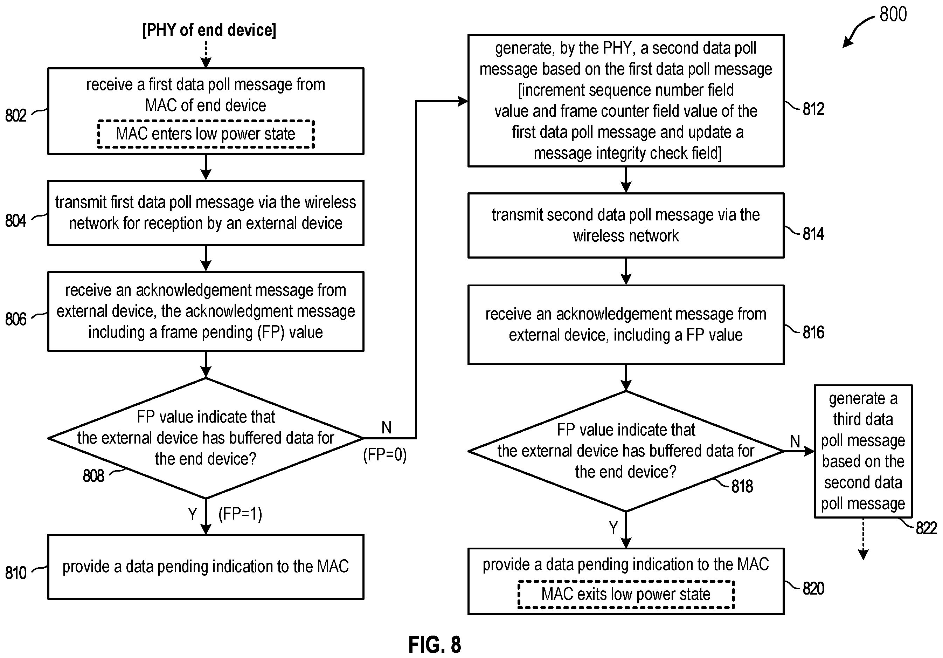

Figure 8 is logic diagram 800 of a method for performing data polling operations and data poll message generation performed by a PHY of an end device according to various embodiments of the present disclosure. In an example, the illustrated method is performed by PHY 202 of end device 106. In another example, the method is performed, in whole or part, by dedicated PHY hardware/circuity of an end device.

The method begins at step 802 where the PHY receives a first data poll message from a MAC of the end device. Upon providing the first data poll message to the PHY, the MAC may offload the generation of successive data poll messages to the PHY (e.g., to a data poll accelerator of the PHY) and enter a low power state until receiving a data pending indication from the PHY.

The method continues at step 804 where the PHY transmits the first data poll message, via a wireless network, for reception by an external device (e.g., a parent device of a mesh network). In response, the PHY receives (at step 806) an acknowledgement message from the external device, the acknowledgement message including a frame pending (FP) value. The acknowledgement message can be, for example, an IEEE 802.15.4 Enh-Ack frame or Imm-Ack frame.

The method continues at step 808, where the PHY determines whether the FP value indicates that the external device has buffered (or pending) data to transmit to end device. In response to determining that the FP value indicates that the external device has pending data for the end device, the PHY provides (at step 810) a data pending indication to the MAC. A data pending indication causes the MAC to exit a low power state and issue a poll request confirmation to a device next higher layer.

In response to determining that there is no buffered data for the end device, the method continues at step 812 where the PHY generates a second data poll message based on the first data poll message. In the illustrated method, generating the second (or successive) data poll message includes one or more of incrementing a sequence number field value of the first data poll message, incrementing a frame counter field value of the first data poll message, and updating a message integrity check field of the first data poll message.

The method continues at step 814, where the PHY transmits the second data poll message to the external device via the wireless network. In response, the PHY receives (at step 816) a second acknowledgement message from the external device including a FP value. In response to determining that the FP value indicates that the external device has pending data for the end device, the PHY provides (at step 820) a data pending indication to the MAC. In addition to causing the MAC to exit a low power state, the data pending indication may include other information that allows the MAC to determine what has occurred during an offloaded data polling sequence. This information may include, but is not limited to, an indication of the number of data poll messages transmitted by the PHY following receipt of the first data poll message from the MAC until receiving the FP value indicating that the external device has buffered data for the end device. In an example, this information is communicated via a callback to code that implements the MAC and permits the MAC to update a MAC state machine with appropriate values (e.g., update MAC counters with current Sequence Number and Frame Counter values).

In response to determining that there is no buffered data for the end device, the method continues at step 822 where the PHY generates a third data poll message based on the second data poll message by incrementing/updating one or more fields of the second data poll message. The method continues as illustrated (i.e., the PHY generates successive data poll messages for transmission at successive polling intervals) until an acknowledgement message indicating pending data (FP=1) is received.

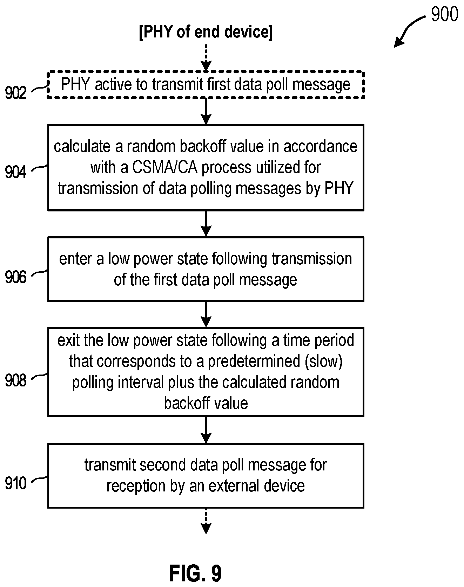

Figure 9 is a logic diagram of an embodiment of a method 900 for calculating a random backoff value. The illustrated method is performed by a PHY of an end device implemented in accordance with various embodiments of the present disclosure. In an example, the illustrated method is performed by PHY 202 of end device 106. In another example, the method is performed, in whole or part, by dedicated PHY hardware/circuity of an end device.

The method begins at step 902, where the PHY wakes up (or remains active) to transmit a first data poll message to an external device of wireless mesh network. While active, the PHY calculates (at step 904) a random backoff value in accordance with a Carrier Sense Multiple Access with Collision Avoidance (CSMA/CA) process utilized for transmission of data polling messages by the PHY. This random backoff value is generated for use in transmitting a second/successive data poll message by the PHY. After calculating the random backoff value and transmitting the first data poll message, the PHY enters a low power state at step 906.

The method proceeds to step 908, where the PHY exits the low power state following a period of time that corresponds to a predetermined (e.g., slow) polling interval plus the calculated random backoff value. Upon exiting the low power state, the PHY transmits (at step 910) the second data poll message and may further calculate a random backoff value for a third/successive data poll message. By calculating random backoff values in this manner, the PHY of the end device does not need to wake up at a predetermined polling interval to calculate a random backoff value for transmission of a (successive) data poll message, thereby resulting in additional power savings.

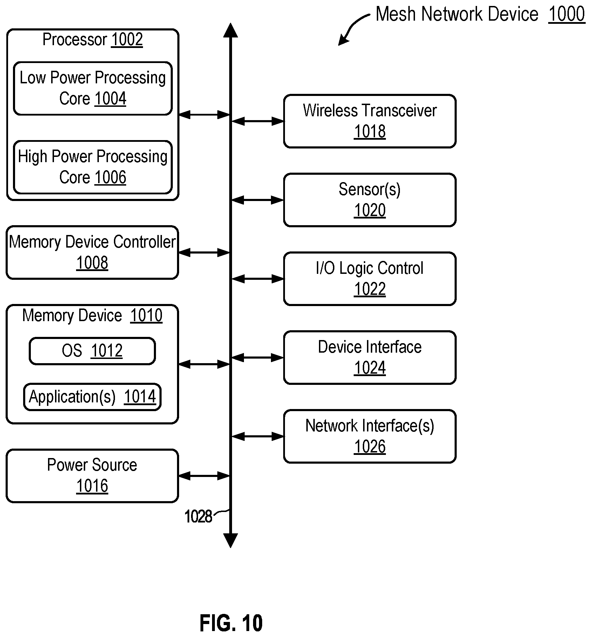

Figure 10 illustrates an example of a wireless mesh network device 1000 that can operate as an end device 106 in accordance with one or more aspects of the present disclosure. In various embodiments, device 1000 includes electronic circuitry, microprocessor(s)/multi-core processor(s), memory, input output (I/O) logic control, communication interfaces and components, as well as other hardware, firmware, and/or software to implement an end device 106 of a wireless mesh network.

In the illustrated embodiment, device 1000 includes processor 1002 (e.g., a microprocessor, controller, a microcontroller, a digital signal processor, etc.) configured to execute program instructions stored in memory device 1010 for implementing various systems and methods described herein. Processor 1002 may include components of an integrated circuit, programmable logic device, a logic device formed using one or more semiconductor devices, and other implementations in silicon and/or hardware, such as a processor and memory system implemented as a system-on-chip (SoC).

In the illustrated embodiment, the processor 1002 includes a plurality of cores (or microprocessors, processing domains, etc.): a low power processing core 1004 and a high power processing core 1006. The high power processing core 1006 can be configured to execute computationally intensive operations, whereas the low power processing core 1004 may manage relatively less-demanding processes. The low power processing core 1004 may also wake or initialize the high power processing core 1006 for computationally intensive processes.

As described more fully above with reference to Figure 3, the low power processing core 1004 and the high power processing core 1006 may operate on separate power domains (e.g., such that the cores can be independently placed in a low power state) and/or in separate processing devices of device 1000. In an example, the low power processing core 1004 is configured to implement a PHY layer of the device 1000 and the high power processing core 1006 is configured to implement a MAC layer of the device 1000. In a further example, the low power processing core 1004 and the wireless transceiver 1018 operate in a separate power domain of device 1000 than the high power processing core 1006.

Sensor(s) 1020 may be implemented to detect various properties such as acceleration, temperature, humidity, water, supplied power, proximity, external motion, device motion, sound signals, ultrasound signals, light signals, fire, smoke, carbon monoxide, global-positioning-satellite (GPS) signals, radio frequency (RF), other electromagnetic signals or fields, or the like. As such, sensor(s) 1020 may include any one or a combination of temperature sensors, humidity sensors, hazard-related sensors, other environmental sensors, accelerometers, microphones, optical sensors up to and including cameras (e.g., charged coupled-device or video cameras, active or passive radiation sensors, GPS receivers, and RF identification (ID) detectors).

The device 1000 further includes a memory device controller 1008 operating in conjunction with memory device 1010, which may be implemented by any type of nonvolatile memory and/or other suitable electronic storage device. Device 1000 may include various firmware and/or software, such as Operating System (OS) 1012 maintained as computer executable instructions in memory device 1010 and executed by processor 1002. Moreover, application(s) 1014 may include a routing application(s) that implements various aspects of the methods described herein.

Device interface 1024 may be configured to receive input from a user and/or provide information to the user. For example, device interface 1024 may also include mechanical or virtual components that respond to a user input. For example, the user can mechanically move a sliding or rotatable component, or the motion along a touchpad may be detected, and may correspond to a setting of device 1000 and operate in conjunction with input-output (I/O) control logic 1022.

The illustrated device 1000 further includes a wireless transceiver 1018 (e.g., an IEEE 802.15.4 radio) for communication with other devices in a wireless mesh network. The wireless transceiver 1018 may be used for wireless communication with other devices and for multiple, different wireless communications systems. For instance, wireless transceiver 1018 may include a radio device, antenna, and chipset implemented for one or more wireless communications technologies such as, for example, IEEE 802.15.4, Wi-Fi, Bluetooth, Bluetooth LE, Mobile Broadband, etc. Device 1000 may further include a network interface(s) 1026 (e.g., a wired communication interface) for additional external network communications.

In device 1000, data bus 1028 couples its various components and enable data communication between those components. Data bus 1028 may be implemented as any suitable combination of one or more bus structures and/or bus architectures. Device 1000 also includes power source 1016, such as a battery and/or to connect the device to line voltage. An AC power source may also be used to charge a battery of the device.

Accordingly, device architectures and methods illustrated in the drawings and described herein reduce the power consumption of end devices in wireless mesh networks. In an illustrative, non-limiting embodiment, an end device includes a wireless transceiver, a first processing core configured to implement a media access control layer (MAC), and a second processing core configured to implement a physical layer (PHY). The PHY operates to receive a first data poll message from the MAC and transmit, via the wireless transceiver, the first data poll message for reception by an external device. The PHY further operates to receive, via the wireless transceiver, an acknowledgement message from the external device in response to the first data poll message, the acknowledgment message including a frame pending value, and determine whether the frame pending value indicates that the external device has buffered data for the end device. In response to determining that there is no buffered data for the end device, the PHY generates a second data poll message based on the first data poll message, including incrementing at least a sequence number field value of the first data poll message.

This embodiment includes optional aspects. With a one optional aspect, generating the second data poll message by the PHY further includes incrementing a frame counter field value of the first data poll message and updating a message integrity check field of the first data poll message. With another optional aspect, the PHY further operates to transmit, via the wireless transceiver, the second data poll message and receive a second acknowledgement message from the external device in response to the second data poll message, the second acknowledgment message including a second frame pending value. In this optional aspect, the PHY further determines whether the second frame pending value indicates that the external device has buffered data for the end device and, in response to determining that the external device has buffered data for the end device, provides a data pending indication to the MAC, wherein the data pending indication is effective to cause the first processing core to exit a low power state.

With yet another optional aspect, the data pending indication further includes an indication of the number of data poll messages transmitted by the PHY following receipt of the first data poll message from the MAC until receiving the second frame pending value indicating that the external device has buffered data for the end device. In another optional aspect, the data pending indication further causes the MAC to issue a poll request confirmation to a device next higher layer. In another optional aspect, the MAC operates to enter a low power state after providing the first data poll message to the PHY, the MAC remaining in the low power state until receiving the data pending indication.

In still another optional aspect, the PHY further operates to calculate a random backoff value in accordance with an IEEE 802.15.4 Carrier Sense Multiple Access with Collision Avoidance (CSMA/CA) process. In this optional aspect, the PHY enters a low power state following transmission of the first data poll message, exits the low power state following a period of time that corresponds to a predetermined slow polling interval plus the calculated random backoff value, and transmits the second data poll message via the wireless transceiver.

With another embodiment, an end device includes a wireless transceiver, first processing circuitry operating in a first power domain of the end device, the first processing circuitry configured to implement a media access control layer (MAC), and second processing circuitry operating in a second power domain of the end device, the second processing circuitry configured to implement a physical layer (PHY). The PHY operates to receive a first data poll message from the MAC and transmit, via the wireless transceiver, the first data poll message for reception by an external device. The PHY further operates to receive, via the wireless transceiver, an acknowledgement message from the external device in response to the first data poll message, the acknowledgment message including a frame pending value, and determine whether the frame pending value indicates that the external device has buffered data for the end device. In response to determining that there is no buffered data for the end device, The PHY generates a second data poll message based on the first data poll message. Generating the second data poll message includes incrementing a sequence number field value of the first data poll message in accordance with a predetermined list of sequence numbers, incrementing a frame counter field value of the first data poll message in accordance with a predetermined list of frame counter values, and updating a message integrity check field of the first data poll message in accordance with a predetermined list of message integrity check field values.

This second embodiment includes optional aspects. With one optional aspect, the first processing circuitry is further configured to enter a low power state after the MAC provides the first data poll message to the PHY. In this optional aspect, the PHY further operates to transmit, via the wireless transceiver, the second data poll message and receive a second acknowledgement message from the external device in response to the second data poll message, the second acknowledgment message including a second frame pending value. In this optional aspect, the PHY further determines whether the second frame pending value indicates that the external device has buffered data for the end device and, in response to determining that the external device has buffered data for the end device, provides a data pending indication to the MAC, wherein the data pending indication is effective to cause the first processing circuitry to exit a low power state.

In another optional aspect, the data pending indication further includes an indication of the number of data poll messages transmitted by the PHY following receipt of the first data poll message from the MAC until receiving the second frame pending value indicating that the external device has buffered data for the end device.

In still another optional aspect, the PHY further operates to calculate a random backoff value in accordance with an IEEE 802.15.4 CSMA/CA process. In this optional aspect, the PHY enters a low power state following transmission of the first data poll message, exits the low power state following a period of time that corresponds to a predetermined slow polling interval plus the calculated random backoff value, and transmits the second data poll message via the wireless transceiver.

In yet another illustrative, non-limiting embodiment, a method for data polling by a physical layer (PHY) of an end device of a wireless network is provided. The method includes receiving a first data poll message from a media access control layer (MAC) of the end device and transmitting the first data poll message via the wireless network for reception by an external device. The method further includes receiving an acknowledgement message from the external device in response to the first data poll message, the acknowledgment message including a frame pending value, and determining whether the frame pending value indicates that the external device has buffered data for the end device. In response to determining that there is no buffered data for the end device, the method further includes generating, by the PHY, a second data poll message based on the first data poll message, including incrementing at least a sequence number field value of the first data poll message.

The method of this embodiment includes optional aspects. With a one optional aspect, generating the second data poll message by the PHY further includes incrementing a frame counter field value of the first data poll message and updating a message integrity check field of the first data poll message. With another optional aspect, the method further includes transmitting the second data poll message via the wireless network and receiving a second acknowledgement message from the external device in response to the second data poll message, the second acknowledgment message including a second frame pending value. In addition, the method further includes determining whether the second frame pending value indicates that the external device has buffered data for the end device and, in response to determining that the external device has buffered data for the end device, providing a data pending indication to the MAC, wherein the data pending indication causes the MAC to exit a low power state. With yet another optional aspect, the data pending indication further includes an indication of the number of data poll messages transmitted by the PHY following receipt of the first data poll message from the MAC until receiving the second frame pending value indicating that the external device has buffered data for the end device.

In another optional aspect, the data pending indication further causes the MAC to issue a poll request confirmation to a device next higher layer. In another optional aspect, the MAC operates to enter a low power state after providing the first data poll message to the PHY, the MAC remaining in the low power state until receiving the data pending indication.

In still another optional aspect, the method further includes calculating, by the PHY, a random backoff value in accordance with a Carrier Sense Multiple Access with Collision Avoidance (CSMA/CA) process utilized for transmission of data polling messages by the PHY. In this optional aspect, the PHY enters a low power state following transmission of the first data poll message, exits the low power state following a period of time that corresponds to a predetermined slow polling interval plus the calculated random backoff value, and transmits the second data poll message via the wireless transceiver. In yet another optional aspect, the MAC operates on a first processing core of the end device and the PHY operates on a second processing core of the end device.

To implement various operations described herein, computer program code (i.e., program instructions for carrying out these operations) may be written in any combination of one or more programming languages, including an object-oriented programming language such as Java, Smalltalk, Python, C++, or the like, conventional procedural programming languages, such as the "C" programming language or similar programming languages, or any of machine learning software. These program instructions may also be stored in a computer readable storage medium that can direct a computer system, other programmable data processing apparatus, controller, or other device to operate in a particular manner, such that the instructions stored in the computer readable medium produce an article of manufacture including instructions which implement the operations specified in the block diagram block or blocks. The program instructions may also be loaded onto a processing core, processing circuitry, computer, other programmable data processing apparatus, controller, or other device to cause a series of operations to be performed on the computer, or other programmable apparatus or devices, to produce a computer implemented process such that the instructions upon execution provide processes for implementing the operations specified in the block diagram block or blocks.

As may be used herein, the term(s) "configured to", "operably coupled to", "coupled to", and/or "coupling" includes direct coupling between items and/or indirect coupling between items via an intervening item (e.g., an item includes, but is not limited to, a component, an element, a circuit, and/or a module) where, for an example of indirect coupling, the intervening item does not modify the information of a signal but may adjust its current level, voltage level, and/or power level. As may further be used herein, inferred coupling (i.e., where one element is coupled to another element by inference) includes direct and indirect coupling between two items in the same manner as "coupled to".

As may further be used herein, the term(s) "configured to", "operable to", "coupled to", or "operably coupled to" indicates that an item includes one or more of power connections, input(s), output(s), etc., to perform, when activated, one or more its corresponding functions and may further include inferred coupling to one or more other items. As may still further be used herein, the term "associated with", includes direct and/or indirect coupling of separate items and/or one item being embedded within another item.

As may be used herein, one or more claims may include, in a specific form of this generic form, the phrase "at least one of a, b, and c" or of this generic form "at least one of a, b, or c", with more or less elements than "a", "b", and "c". In either phrasing, the phrases are to be interpreted identically. In particular, "at least one of a, b, and c" is equivalent to "at least one of a, b, or c" and shall mean a, b, and/or c. As an example, it means: "a" only, "b" only, "c" only, "a" and "b", "a" and "c", "b" and "c", and/or "a", "b", and "c".

As may also be used herein, the terms "processor", "processing circuitry", "processing circuit", "processing module", and/or "processing unit" may be a single processing device or a plurality of processing devices. Such a processing device may be a microprocessor, microcontroller, digital signal processor, microcomputer, central processing unit, field programmable gate array, programmable logic device, state machine, logic circuitry, analog circuitry, digital circuitry, and/or any device that manipulates signals (analog and/or digital) based on hard coding of the circuitry and/or operational instructions. Further, such a processing device may include a plurality of processing cores or processing domains, which may operate on separate power domains. The processor, processing circuitry, processing circuit, processing module, and/or processing unit may be, or further include, memory and/or an integrated memory element, which may be a single memory device, a plurality of memory devices, and/or embedded circuitry of another processor, processing circuitry, processing circuit, processing module, and/or processing unit. Such a memory device may be a read-only memory, random access memory, volatile memory, non-volatile memory, static memory, dynamic memory, flash memory, cache memory, and/or any device that stores digital information. Note that if the processor, processing circuitry, processing circuit, processing module, and/or processing unit includes more than one processing device, the processing devices may be centrally located (e.g., directly coupled together via a wired and/or wireless bus structure) or may be distributedly located (e.g., cloud computing via indirect coupling via a local area network and/or a wide area network). Further note that if the processor, processing circuitry, processing circuit, processing module, and/or processing unit implements one or more of its functions via a state machine, analog circuitry, digital circuitry, and/or logic circuitry, the memory and/or memory element storing the corresponding operational instructions may be embedded within, or external to, the circuitry comprising the state machine, analog circuitry, digital circuitry, and/or logic circuitry. Still further note that, the memory element may store, and the processor, processing circuitry, processing circuit, processing module, and/or processing unit executes, hard coded and/or operational instructions corresponding to at least some of the steps and/or functions illustrated in one or more of the figures. Such a memory device or memory element can be included in an article of manufacture.

One or more embodiments have been described above with the aid of method steps illustrating the performance of specified functions and relationships thereof. The boundaries and sequence of these functional building blocks and method steps have been arbitrarily defined herein for convenience of description. Alternate boundaries and sequences can be defined so long as the specified functions and relationships are appropriately performed. Any such alternate boundaries or sequences are thus within the scope and spirit of the claims.

To the extent used, the logic diagram block boundaries and sequence could have been defined otherwise and still perform the certain significant functionality. Such alternate definitions of both functional building blocks and logic diagram blocks and sequences are thus within the scope and spirit of the claims. One of average skill in the art will also recognize that the functional building blocks, and other illustrative blocks, modules and components herein, can be implemented as illustrated or by discrete components, application specific integrated circuits, processors/processing cores executing appropriate software and the like or any combination thereof.

The one or more embodiments are used herein to illustrate one or more aspects, one or more features, one or more concepts, and/or one or more examples. A physical embodiment of an apparatus, an article of manufacture, a machine, and/or of a process may include one or more of the aspects, features, concepts, examples, etc. described with reference to one or more of the embodiments discussed herein. Further, from figure to figure, the embodiments may incorporate the same or similarly named functions, steps, modules, etc. that may use the same or different reference numbers and, as such, the functions, steps, modules, etc. may be the same or similar functions, steps, modules, etc. or different ones.

The term "module" may be used in the description of one or more of the embodiments. A module implements one or more functions via a device such as a processor or other processing device or other hardware that may include or operate in association with a memory that stores operational instructions. A module may operate independently and/or in conjunction with software and/or firmware. As also used herein, a module may contain one or more sub-modules, each of which may be one or more modules.

As may further be used herein, a computer readable memory includes one or more memory elements. A memory element may be a separate memory device, multiple memory devices, or a set of memory locations within a memory device. Such a memory device may be a read-only memory, random access memory, volatile memory, non-volatile memory, static memory, dynamic memory, flash memory, cache memory, a quantum register or other quantum memory and/or any other device that stores data in a non-transitory manner. Furthermore, the memory device may be in a form of a solid-state memory, a hard drive memory or other disk storage, cloud memory, thumb drive, server memory, computing device memory, and/or other non-transitory medium for storing data. The storage of data includes temporary storage (i.e., data is lost when power is removed from the memory element) and/or persistent storage (i.e., data is retained when power is removed from the memory element). As used herein, a transitory medium shall mean one or more of: (a) a wired or wireless medium for the transportation of data as a signal from one computing device to another computing device for temporary storage or persistent storage; (b) a wired or wireless medium for the transportation of data as a signal within a computing device from one element of the computing device to another element of the computing device for temporary storage or persistent storage; (c) a wired or wireless medium for the transportation of data as a signal from one computing device to another computing device for processing the data by the other computing device; and (d) a wired or wireless medium for the transportation of data as a signal within a computing device from one element of the computing device to another element of the computing device for processing the data by the other element of the computing device. As may be used herein, a non-transitory computer readable memory is substantially equivalent to a computer readable memory. A non-transitory computer readable memory can also be referred to as a non-transitory computer readable storage medium.

While particular combinations of various functions and features of the one or more embodiments have been expressly described herein, other combinations of these features and functions are likewise possible. The present disclosure is not limited by the particular examples disclosed herein and expressly incorporates these other combinations.

## Claims

1. An end device, comprising:
a wireless transceiver;
a first processing core configured to implement a media access control layer, MAC; and
a second processing core configured to implement a physical layer, PHY, wherein the PHY operates to:
receive, from the MAC, a first data poll message;
transmit, via the wireless transceiver, the first data poll message for reception by an external device;
receive, via the wireless transceiver, an acknowledgement message from the external device in response to the first data poll message, the acknowledgment message including a frame pending value;
determine whether the frame pending value indicates that the external device has buffered data for the end device; and
in response to determining that there is no buffered data for the end device, generate a second data poll message based on the first data poll message, including incrementing at least a sequence number field value of the first data poll message.

2. The end device of claim 1, wherein generating the second data poll message by the PHY further includes:
incrementing a frame counter field value of the first data poll message; and
updating a message integrity check field of the first data poll message.

3. The end device of claim 1 or 2, wherein the PHY further operates to:
transmit, via the wireless transceiver, the second data poll message;
receive, via the wireless transceiver, a second acknowledgement message from the external device in response to the second data poll message, the second acknowledgment message including a second frame pending value;
determine whether the second frame pending value indicates that the external device has buffered data for the end device; and
in response to determining that the external device has buffered data for the end device, provide a data pending indication to the MAC, wherein the data pending indication is effective to cause the first processing core to exit a low power state.

4. The end device of claim 3, wherein the data pending indication further includes an indication of the number of data poll messages transmitted by the PHY following receipt of the first data poll message from the MAC until receiving the second frame pending value indicating that the external device has buffered data for the end device.

5. The end device of claim 3 or 4, wherein the data pending indication further causes the MAC to issue a poll request confirmation to a device next higher layer.

6. The end device of any of claims 3 to 5, wherein the MAC operates to enter a low power state after providing the first data poll message to the PHY, the MAC remaining in the low power state until receiving the data pending indication.

7. The end device of any preceding claim, wherein the PHY further operates to:
calculate a random backoff value in accordance with an IEEE 802.15.4 Carrier Sense Multiple Access with Collision Avoidance, CSMA/CA, process;
enter a low power state following transmission of the first data poll message; exit the low power state following a period of time that corresponds to a predetermined slow polling interval plus the calculated random backoff value; and
transmit, via the wireless transceiver, the second data poll message.

8. The end device of any preceding claim 1, wherein the acknowledgement message is an IEEE 802.15.4 Enh-Ack frame or Imm-Ack frame.

9. The end device of any preceding claim 1, wherein the first processing core is a high power processing core and the second processing core is a low power processing core.

10. A method of data polling by a physical layer, PHY, of an end device of a wireless network, the method comprising:
receiving, from a media access control layer, MAC, of the end device, a first data poll message;
transmitting the first data poll message via the wireless network for reception by an external device;
receiving an acknowledgement message from the external device in response to the first data poll message, the acknowledgment message including a frame pending value;
determining whether the frame pending value indicates that the external device has buffered data for the end device; and
in response to determining that there is no buffered data for the end device, generating, by the PHY, a second data poll message based on the first data poll message, including incrementing at least a sequence number field value of the first data poll message.

11. The method of claim 10, wherein generating the second data poll message based on the first data poll message further includes:
incrementing a frame counter field value of the first data poll message; and
updating a message integrity check field of the first data poll message.

12. The method of claim 10 or 11, further comprising:
transmitting the second data poll message via the wireless network;
receiving a second acknowledgement message from the external device in response to the second data poll message, the second acknowledgment message including a second frame pending value;
determining whether the second frame pending value indicates that the external device has buffered data for the end device; and
in response to determining that the external device has buffered data for the end device, providing a data pending indication to the MAC, wherein the data pending indication causes the MAC to exit a low power state.

13. The method of claim 12, wherein the data pending indication further includes an indication of the number of data poll messages transmitted by the PHY following receipt of the first data poll message from the MAC until receiving the second frame pending value indicating that the external device has buffered data for the end device.

14. The method of claim 12 or 13, wherein the data pending indication further causes the MAC to issue a poll request confirmation to a device next higher layer.

15. The method of claim 12, 13 or 14, wherein the MAC enters a low power state after providing the first data poll message to the PHY, the MAC remaining in the low power state until receiving the data pending indication.
